(19) Europäisches Patentamt

European Patent Office

Office européen des brevets

(11) **EP 0 673 819 B1**

(12) **FASCICULE DE BREVET EUROPEEN**

(45) Date de publication et mention
de la délivrance du brevet:
**25.08.1999 Bulletin 1999/34**

(51) Int. Cl.⁶: $B61D\ 17/02$

(21) Numéro de dépôt: **95400624.3**

(22) Date de dépôt: **21.03.1995**

(54) **Dispositif de réduction de la traînée aérodynamique d'une cavité dans un écoulement et véhicule, notamment ferroviaire, comprenant un tel dispositif**

Vorrichtung zum Reduzieren des Strömungswiderstandes einer Kavität und Fahrzeug, insbesondere Schienenfahrzeug, mit dieser Vorrichtung

Device for reducing the aerodynamic drag of a cavity in a flow and a vehicle, particularly a railway vehicle, comprising such a device

(84) Etats contractants désignés:
**DE ES FR IT**

(30) Priorité: **24.03.1994 FR 9403472**

(43) Date de publication de la demande:
**27.09.1995 Bulletin 1995/39**

(73) Titulaire:
**GEC ALSTHOM TRANSPORT SA**
**75016 Paris (FR)**

(72) Inventeurs:
 • **Haentjes, Stéphen**
  **F-17000 La Rochelle (FR)**
 • **Chappet, Philippe**
  **F-90300 Cravanche (FR)**
 • **Tessier, Jean-Luc**
  **F-13003 Marseille (FR)**
 • **Ardissone, Jean-Paul**
  **F-13003 Marseille (FR)**
 • **Gupbergia, Jean-Pierre**
  **F-13003 Marseille (FR)**

(74) Mandataire: **Gosse, Michel et al**
 **ALSTOM France SA**
 **Service de Propriété Industrielle**
 **c/o CEGELEC**
 **5, Avenue Newton**
 **92142 Clamart Cédex (FR)**

(56) Documents cités:
 EP-A- 0 539 904          BE-A- 417 270
 BE-A- 896 717            DE-U- 9 003 626
 FR-A- 805 960            US-A- 2 182 640
 US-A- 4 779 915

## Description

La présente invention concerne les dispositifs permettant de modifier le profil aérodynamique d'un véhicule, notamment ferroviaire, c'est à dire les dispositifs modifiant la résistance à l'avancement engendrée par des cavités présentes sur sa surface extérieure, et porte, plus particulièrement, sur un véhicule, notamment ferroviaire, comprenant un dispositif de réduction de la traînée aérodynamique d'une cavité dans un écoulement.

Les véhicules de transport, notamment les véhicules ferroviaires, ont des exigences de réduction de la résistance à l'avancement pour réduire le dimensionnement des équipements de traction et limiter la consommation d'énergie.

Ainsi, on recherche les profils les plus aérodynamiques possibles. Cependant, la surface extérieure d'un train présente différentes cavités, telles: les césures entre voitures, les logements de pantographes, les logements de bogie sous caisse, qui constituent autant d'obstacles à l'avancement du train et augmentent le niveau du bruit.

A vitesse élevée, une part importante de la résistance à l'avancement est due à la traînée aérodynamique des véhicules.

Une part de cette traînée est due aux incidents de forme de la carène extérieure des véhicules, plus particulièrement aux cavités. Dans le cas d'un train ce sont les césures entre véhicules d'un même convoi et les cavités qui reçoivent les bogies qui modifient le plus le profil aérodynamique.

Un moyen connu de l'état de la technique permettant de résoudre ces problèmes consiste à placer des bavettes en caoutchouc entre les voitures, de manière à assurer la continuité aérodynamique. Un inconvénient de cette solution est qu'elle condamne l'accessibilité aux appareils. De plus, ces dispositifs sont peu fiables dans le temps et augmentent la durée des interventions des services d'entretien. Il en est de même pour le logements de bogies et de pantographes où des systèmes de carénage fixes ou mobiles viennent masquer les cavités. Ces carénages cachent les appareils au détriment de la sécurité.

Les problèmes présentés par ce type de cavités ne sont donc pas résolus de manière satisfaisante.

Le document FR-A-805 960 décrit un dispositif pour la diminution de la résistance à l'avancement, due aux césures ou autres interruptions des véhicules.

Le dispositif de l'état de la technique consiste en au moins une surface déflectrice disposée sur le véhicule, au droit de l'interruption, en particulier à l'extrémité des wagons ou autres véhicules susceptibles d'être accouplés.

Les surfaces déflectrices sont disposées en prolongement de la surface du véhicule sur laquelle glisse l'air relatif et de telle manière qu'elle régularise l'écoulement de cet air relatif, qui tend à pénétrer dans l'interruption où il crée normalement une zone de remous.

Ce document FR-A-805 960 de l'état de la technique enseigne que les surfaces déflectrices sont sensiblement placées dans le plan d'écoulement de l'air relatif, c'est-à-dire, en prolongement des parois du véhicule. Les surfaces déflectrices peuvent être placées un peu en retrait, mais elles ne doivent pas en principe faire saillie à l'extérieur de ces parois.

Comme enseigné par ce document, les surfaces déflectrices sont basées sur la déviation vers l'extérieur des filets d'air. Il ressort de ce document que les surfaces déflectrices agissent comme des déflecteurs et qu'elles n'ont aucun effet technique sur l'écoulement de l'air à l'intérieur des cavités.

Le document BE-A-417 270 décrit un équipement pour le carénage des corps mobiles comportant des surfaces déviatrices issues d'organes mobiles en position et articulés autour d'axes d'oscillation, de manière qu'ils puissent prendre des orientations variables et soit réduire la résistance à l'avancement du corps mobile, soit au contraire l'accroître.

Comme enseigné par ce document, les surfaces déviatrices sont basées sur la déviation latérale des filets d'air. Il ressort également de ce document que les surfaces déviatrices agissent comme des déflecteurs et qu'elles n'ont aucun effet technique sur l'écoulement de l'air à l'intérieur des cavités.

Le document US-A-2 182 640 montre un véhicule selon le préambule de la revendication 1.

Il apparaît que les problèmes présentés par ce type de cavités ne sont pas résolus de manière satisfaisante pour les raisons données ci-après.

Il est connu que la traînée aérodynamique d'une cavité dépend fortement du rapport $\alpha$ entre sa largeur l et sa profondeur P.

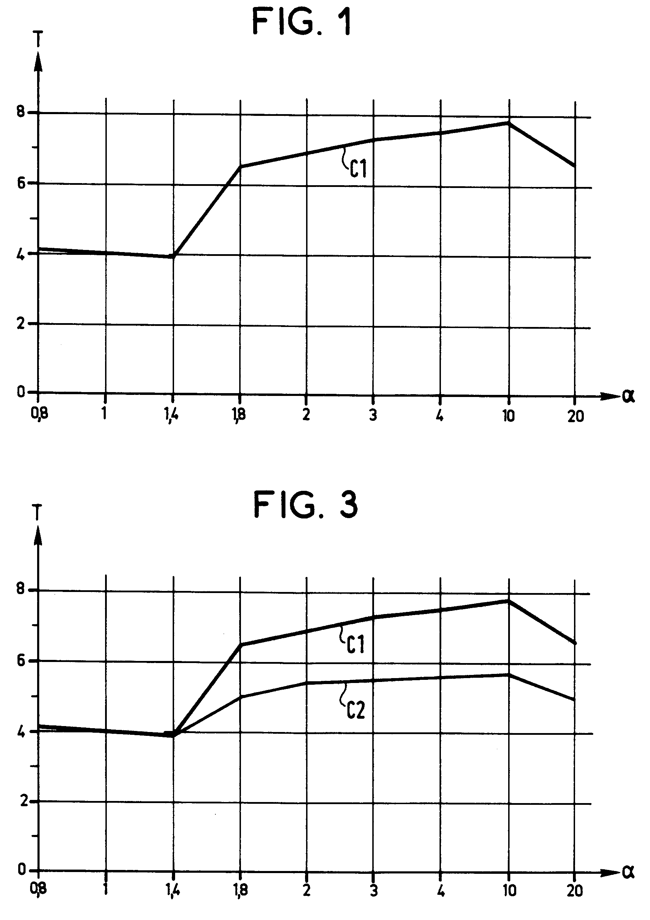

Comme indiqué sur la figure 1, à largeur l donnée de la cavité, la valeur de la traînée est minimale pour une valeur du rapport $\alpha$ proche de 1. La valeur de la traînée double brutalement lorsque le rapport $\alpha$ est voisin de 2 et reste à peu près constante jusqu'à ce que le rapport a soit égal à 10 pour redescendre ensuite lentement lorsque le rapport a est supérieur à 10.

Il s'avère que les cavités de l'art antérieur, par exemple celles décrites dans les documents cités précédemment, ont un rapport $\alpha$ compris entre 2 et 10 et correspondent donc au cas le plus défavorable.

Une solution difficile à mettre en oeuvre consiste à boucher les cavités.

Une autre solution consiste à se rapprocher d'un cas où le rapport a est égal à 1. Cette solution est également difficile à mettre en oeuvre du fait que cela revient soit à diminuer la largeur l, qui est en général imposée par des jeux, soit à augmenter le volume de la cavité, ce qui est défavorable à l'aménagement intérieur du véhicule.

Une autre solution est donnée dans le document FR 91 13 510 de la demanderesse.

Le document FR 91 13 510 de la demanderesse décrit des moyens permettant de réduire la résistance à l'avancement engendrée par des cavités comprenant pour une cavité, au moins un profil disposé à proximité de la cavité mais pas en face de cette cavité, le profil étant maintenu à une distance déterminée de la surface extérieure du train, cette distance déterminée permettant de réduire ladite résistance à l'avancement.

Cette solution a comme inconvénients que les profils doivent être disposés à une distance relativement importante de la cavité et à une hauteur relativement importante de la paroi. Cette solution implique des problèmes d'encombrement et de gabarit extérieur du véhicule.

C'est le mérite de la demanderesse que de proposer un dispositif de réduction de la traînée aérodynamique d'une cavité dans un écoulement, prenant en compte les dimensions de la cavité, ainsi que le gabarit du véhicule.

En d'autre termes, le dispositif de réduction de la traînée aérodynamique de l'invention n'impose pas que l'on fasse varier les dimensions de la cavité et que l'on augmente sensiblement le gabarit du véhicule.

Conformément à l'invention, le véhicule selon le préambule de la revendication 1 comprend

un dispositif de réduction de la traînée aérodynamique satisfaisant aux caractéristiques suivantes:

- la lamelle est disposée parallèlement à la paroi du véhicule;
- la lamelle est telle que:

$$0 \leq a/c \leq 1$$

$$0,05 \leq c/l \leq 0,5$$

$$0 \leq d/E \leq 0,1$$

$$0,03 \leq e/E \leq 0,07$$

. la lettre l désignant la largeur de la cavité,
. la lettre a désignant la longueur de la partie de la lamelle débordant sur la cavité,
. la lettre c désignant la largeur de la lamelle,
. la lettre d désignant l'épaisseur de la lamelle,
. la lettre e désignant la distance entre la paroi du véhicule et la lamelle,
. la lettre E désignant l'épaisseur de la couche limite de l'écoulement en amont de la cavité.

La lamelle pourrait être telle que:

a/c est égal à 0,33;
c/l est égal à 0,21;
d/E est égal à 0,028; et
e/E est égal à 0,043;

D'autres buts, caractéristiques et avantages de l'invention apparaîtront à la lecture de la description du dispositif de réduction de la traînée aérodynamique d'une cavité dans un écoulement, description faite en liaison avec les dessins joints dans lesquels:

- la figure 1 montre une courbe représentant, pour une largeur l donnée de la cavité, les différentes valeurs de la traînée aérodynamique T en fonction des valeurs du rapport $\alpha$
- la figure 2 représente une vue en coupe horizontale du dispositif de réduction de la traînée aérodynamique d'une cavité dans un écoulement conforme à l'invention;
- la figure 3 montre deux courbes représentant la valeur de la traînée aérodynamique T en fonction des valeurs du rapport $\alpha$ lorsque, respectivement, la cavité n'est pas et est équipée du dispositif de réduction de la traînée aérodynamique de l'invention.

La figure 1, décrite ci-dessus, montre une courbe C1 représentant, pour une largeur l donnée d'une cavité de l'art antérieur, les différentes valeurs de la traînée aérodynamique T en fonction des valeurs du rapport $\alpha$.

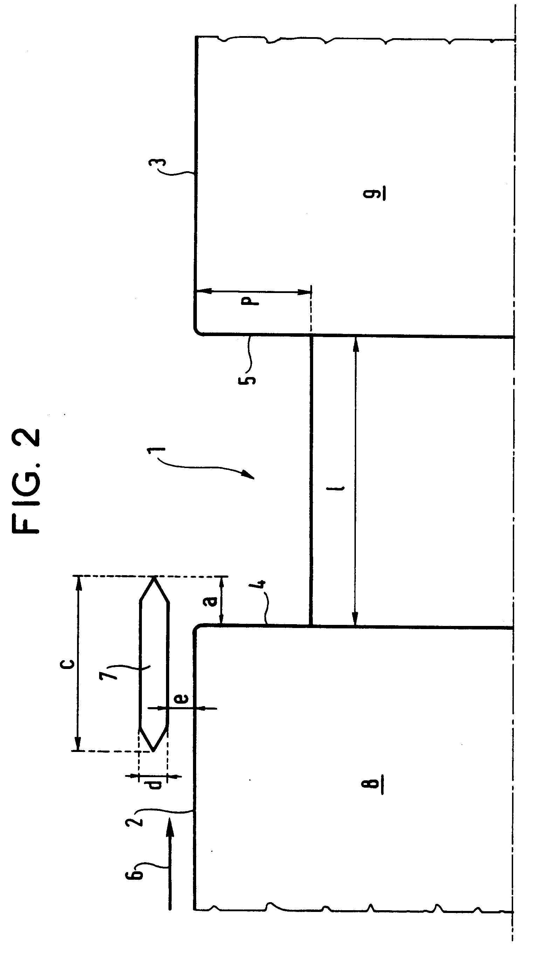

La figure 2 représente une vue de dessus du dispositif de réduction de la traînée aérodynamique d'une cavité dans un écoulement conforme à l'invention.

La cavité 1 est délimitée par une première 2 et une seconde 3 paroi d'un véhicule 8 donnant naissance à un premier 4 et un second 5 bord de cavité.

Sur la figure 2, la lettre l désigne la largeur de la cavité 1 et la lettre P sa profondeur.

Conformément à l'invention, le dispositif de réduction de la traînée aérodynamique d'une cavité 1 dans un écoulement 6 comprend une lamelle 7 disposée en amont de la cavité 1, à cheval sur au moins l'un des bords 4, 5 et sur la paroi correspondante 2, 3 du véhicule correspondant 8, 9 et à proximité de ladite paroi 2, 3.

La lamelle 7 est disposée, de préférence, parallèlement à la paroi 2, 3 du véhicule 8, 9.

Sur la figure 2 figurent également les lettres a, c, d et e:

- la lettre a désigne la longueur de la partie de la lamelle débordant sur la cavité;
- la lettre c désigne la largeur de la lamelle;
- la lettre d désigne l'épaisseur de la lamelle;
- la lettre e désigne la distance entre la paroi du véhicule et la lamelle;
- la lettre E désignant l'épaisseur de la couche limite de l'écoulement en amont de la cavité.

Le livre intitulé BOUNDARY LAYER THEORY, de Schlichting, édité en 1968, aux éditions Mc GRAY-HILL New-York, défini ce qu'est une couche limite de l'écoulement.

L'invention consiste en une sélection parmi un nombre infini de rapport entre les différentes dimensions de la lamelle.

Le tableau 1 ci-dessous donne, pour des valeurs du rapport $\alpha$ supérieures ou égales à 2 et inférieures ou égales à 20, les valeurs optimales préférées de différents rapport entre différentes dimensions de la lamelle.

Tableau 1

| RAPPORT | VALEUR |
|---------|--------|
| a/c | 0,33 |
| c/l | 0,21 |
| d/E | 0,028 |
| e/E | 0,043 |

Les dimensions et la position de la lamelle peuvent varier un peu autour des valeurs optimales données ci-dessus sans pour autant dégrader, de façon importante, le gain réalisé sur la valeur de la traînée du fait de la présence de la lamelle.

Le tableau 2 ci-dessous donne les gammes de valeurs des différents rapport entre les dimensions de la lamelle, gammes de valeurs pour lesquelles le gain réalisé sur la valeur de la traînée, du fait de la présence de la lamelle, ne se dégrade pas de façon importante.

Tableau 2

| VALEUR MINIMALE | RAPPORT | VALEUR MAXIMALE |
|-----------------|---------|-----------------|
| 0 | a/c | 1 |
| 0,05 | c/l | 0,5 |
| 0 | d/E | 0,1 |
| 0,03 | e/E | 0,07 |

Cette sélection des rapports entre dimensions de la lamelle a comme effet inattendu que le gain de traînée obtenu par le dispositif de réduction de la traînée aérodynamique de l'invention est d'environ 30 à 40 %, une fois prise en compte la traînée propre des lamelles.

Il a été observé que la lamelle diposée en amont de la cavité réduit les fluctuations de vitesse au dessus de la cavité. Ceci veut dire que la lamelle réduit les contraintes de cisaillement de l'écoulement dans cette zone, réduisant ainsi la quantité d'énergie transmise par l'écoulement au fluide présent dans la cavité.

Il apparait que pour des valeurs de $\alpha$ comprises entre 1,5 et 20, et surtout entre 2 et 10, cette quantité d'énergie est particulièrement élevée lorsque la cavité n'est pas munie du dispositif selon l'invention, alors qu'elle est comparativement faible pour des valeurs de $\alpha$ inférieures à 1,5. Ce qui précède explique pourquoi le dispositif selon l'invention est efficace quand $\alpha$ est compris entre 1,5 et 20.

La traînée aérodynamique de la cavité ainsi équipée se rapproche donc de celle que la cavité aurait si le rapport $\alpha$ était égal à 1.

Des essais complémentaires ont montré que, de façon surprenante, lorsque le rapport $\alpha$ est égal à 1, le dispositif ne modifie pas la traînée de la cavité, une fois prise en compte la traînée propre des lamelles.

La figure 3 montre une courbe C2 représentant, en fonction des valeurs du rapport $\alpha$, les différentes valeurs de la traînée aérodynamique T lorsque la cavité est équipée du dispositif de réduction de la traînée aérodynamique de l'invention. La courbe C1 représentée à la figure 1 et représentant, en fonction des valeurs du rapport $\alpha$, les différentes valeurs de la traînée aérodynamique T lorsque la cavité n'est pas équipée du dispositif de réduction de la traînée aérodynamique de l'invention, est reprise sur cette figure 3.

Les lamelles sont fixées de façon permanente à la surface extérieure du véhicule au moyen de supports connus (non représentés). Les supports peuvent être eux-mêmes fixés aux véhicules par rivetage ou par soudage.

Les lamelles et leurs supports peuvent être dans le même matériau que celui utilisé pour réaliser les caisses de véhicules.

## Revendications

1.  Véhicule (8, 9), notamment ferroviaire, ayant une surface extérieure (2, 3) le long de laquelle un écoulement d'air (6) est créé, et qui présente une cavité (1) et un dispositif de réduction de la traînée aérodynamique (7) créée par cette cavité (1), ladite cavité (1) possédant un bord avant (4) et un bord arrière (5) espacé du bord avant (4) suivant la direction de l'écoulement de l'air, le dispositif comprenant une lamelle (7) disposée parallèlement à la surface extérieure (2, 3) du véhicule et à cheval sur le bord avant (4) de la cavité caractérisé en ce que ladite lamelle (7) et sa disposition sont telles que :

$$0 \le a/c \le 1$$

$$0,05 \le c/l \le 0,5$$

$$0 \le d/E \le 0,1$$

$$0,03 \le e/E \le 0,07$$

avec :

-   l désignant la largeur de la cavité (1) entre le bord avant (4) et le bord arrière (5) suivant la direction de l'écoulement d'air (6)
-   a désignant la partie de longueur de la lamelle (7) qui chevauche la cavité (1) suivant la direction de l'écoulement d'air (6)
-   c désignant la longueur de la lamelle (7) suivant la direction de l'écoulement d'air (6)
-   d désignant l'épaisseur de la lamelle (7) perpendiculairement à la direction de l'écoulement d'air (6)
-   e désignant la distance entre la lamelle (7) et la surface extérieure (2, 3) du véhicule (8, 9) perpendiculairement à la direction de l'écoulement d'air (6)
-   E désignant l'épaisseur de la couche limité de l'écoulement d'air en amont de la cavité (1) de la surface extérieure du véhicule (2, 3).

2.  Véhicule (8, 9) selon la revendication 1, dans lequel la lamelle (7) est telle que :

$$a/c \text{ est égal à } 0,33;$$

$$c/l \text{ est égal à } 0,21;$$

$$d/E \text{ est égal à } 0,028; \text{ et}$$

$$e/E \text{ est égal à } 0,043;$$

**Claims**

1.  A vehicle (8, 9), in particular a rail vehicle, having an outside surface (2, 3) along which an air flow (6) is created, and which presents a cavity (1), and a device (7) for reducing the aerodynamic drag created by said cavity (1), said cavity (1) having a front edge (4) and a rear edge (5) separated from the front edge (4) in the direction of the air flow, the device comprising a blade (7) disposed parallel to the outside surface (2, 3) of the vehicle and overlapping the front edge (4) of the cavity, the vehicle being characterized in that said blade (7) and its disposition are such that:

$$0 \leq a/c \leq 1$$

$$0.05 \leq c/l \leq 0.5$$

$$0 \leq d/E \leq 0.1$$

$$0.03 \leq e/E \leq 0.07$$

    where:

    - $l$ designates the width of the cavity (1) between the front edge (4) and the rear edge (5) in the direction of the air flow (6);
    - $a$ designates the portion of length of the blade (7) which overlaps the cavity (1) in the direction of the air flow (6);
    - $c$ designates the length of the blade (7) in the direction of the air flow (6);
    - $d$ designates the thickness of the blade (7) perpendicular to the direction of the air flow (6);
    - $e$ designates the distance between the blade (7) and the outside surface (2, 3) of the vehicle (8, 9) perpendicular to the direction of the air flow (6); and
    - E designates the thickness of the boundary layer of the air flow upstream from the cavity (1) in the outside surface of the vehicle (2, 3).

2.  A vehicle (8, 9) according to claim 1, in which:

    the blade (7) is such that:

        a/c is equal to 0.33;
        c/l is equal to 0.21;
        d/E is equal to 0.028; and
        e/E is equal to 0.043.

**Patentansprüche**

1.  Fahrzeug (8, 9), insbesondere Bahnfahrzeug, mit einer Außenfläche (2, 3) entlang der eine Luftströmung (6) erzeugt wird, die einen Hohlraum (1) und eine Vorrichtung (7) zur Verminderung des durch diesen Hohlraum (1) erzeugten Luftwiderstandes aufweist, wobei der genannte Hohlraum (1) einen Vorderrand (4) und, in Richtung der Luftströmung vom Vorderrand (4) getrennt, einen Hinterrand (5) aufweist, und wobei die Vorrichtung eine parallel zur Außenfläche (2, 3) des Fahrzeugs gerichtete und rittlings auf dem Vorderrand (4) des Hohlraumes angeordnete Lamelle (7) umfasst, **dadurch gekennzeichnet, dass** für die genannte Lamelle (7) und ihre Anordnung gilt:

$$0 \leq a/c \leq 1$$

$$0,05 \leq c/l \leq 0,5$$

$$0 \leq d/E \leq 0,1$$

$$0,03 \leq e/E \leq 0,07$$

    mit:

- l bezeichnet die Breite des Hohlraumes (1) zwischen dem Vorderrand (4) und dem Hinterrand (5) längs der Richtung der Luftströmung (6)
- a bezeichnet den Längenabschnitt der Lamelle (7), der sich längs der Richtung der Lufströmung (6) mit dem Hohlraum (1) überschneidet
- c bezeichnet die Länge der Lamelle (7) längs der Richtung der Luftströmung (6)
- d bezeichnet die Dicke der Lamelle (7) senkrecht zur Richtung der Luftströmung (6)
- e bezeichnet den Abstand zwischen der Lamelle (7) und der Außenfläche (2, 3) des Fahrzeugs (8, 9) senkrecht zur Richtung der Luftströmung (6)
- E bezeichnet die Dicke der begrenzten Schicht der Luftströmung stromaufwärts des Hohlraumes (1) der Außenfläche des Fahrzeuges (2, 3).

2. Fahrzeug (8, 9) nach Anspruch 1, bei welchem für die Lamelle (7) gilt:

$$a/c \text{ beträgt } 0{,}33;$$

$$c/l \text{ beträgt } 0{,}21;$$

$$d/E \text{ beträgt } 0{,}028; \text{ und}$$

$$e/E \text{ beträgt } 0{,}043.$$

# FIG. 1

# FIG. 3

# FIG. 2